# FASCICULE DE BREVET EUROPEEN

(11) **EP 2 321 866 B1**
(45) Date de publication et mention de la délivrance du brevet: **01.04.2015**
(21) Numéro de dépôt: 09809330.5
(22) Date de dépôt: 24.08.2009
(51) Int. Cl.: H01M 4/58, H01M 10/0525, H01M 4/587, H01M 10/0567, H01M 10/42

(54) **ACCUMULATEURS RECHARGEABLES LITHIUM ION COMPRENANT UN ÉLECTROLYTE LIQUIDE IONIQUE**
LITHIUM-IONEN-AKKUMULATOREN MIT IONISCHEM FLÜSSIGELEKTROLYT
LITHIUM-ION RECHARGEABLE ACCUMULATORS INCLUDING AN IONIC LIQUID ELECTROLYTE

(30) Priorité: 29.08.2008 FR 0855805
(43) Date de publication de la demande: 18.05.2011
(73) Titulaire: COMMISSARIAT A L'ENERGIE ATOMIQUE ET AUX ENERGIES ALTERNATIVES, 75015 Paris (FR); Centre National de la Recherche Scientifique, 75016 Paris (FR)
(72) Inventeur: GIROUD, Nelly, F-38100 Grenoble (FR); ROUAULT, Hélène, F-38420 Le Versoud (FR)
(74) Mandataire: Ilgart, Jean-Christophe
(86) Numéro de dépôt international: PCT/EP2009/060884
(87) Numéro de publication internationale: WO 2010/023185

(56) Documents cités:
- EP-A- 1 548 866
- EP-A1- 1 906 481
- WO-A-2007/088677
- US-A1- 2006 087 797
- US-A1- 2007 243 463
- XU ET AL: "Additive-containing ionic liquid electrolytes for secondary lithium battery" JOURNAL OF POWER SOURCES, ELSEVIER, AMSTERDAM, NL, vol. 160, no. 1, 29 septembre 2006 (2006-09-29), pages 621-626, XP005649275 ISSN: 0378-7753
- LEWANDOWSKI ET AL: "Properties of the graphite-lithium anode in N-methyl-N-propylpiperid inium bis(trifluoromethanesulfonyl)imide as an electrolyte" JOURNAL OF POWER SOURCES, ELSEVIER, AMSTERDAM, NL, vol. 171, no. 2, 8 septembre 2007 (2007-09-08), pages 938-943, XP022238109 ISSN: 0378-7753

## Description

### DOMAINE TECHNIQUE

L'invention concerne un accumulateur rechargeable lithium ion comprenant un électrolyte liquide.

Plus particulièrement, l'invention concerne un accumulateur au lithium ion comprenant une électrode négative en carbone graphite et une électrode positive en LiFePO₄ (phosphate de fer lithié), comprenant un électrolyte liquide, plus précisément un électrolyte comprenant un solvant liquide ionique et un sel conducteur.

L'électrolyte liquide de l'accumulateur selon l'invention peut ainsi être appelé électrolyte liquide ionique.

L'invention a plus particulièrement trait à un accumulateur rechargeable lithium ion dont l'électrolyte liquide comprend un solvant liquide ionique et un sel de lithium.

L'invention trouve son application dans le domaine du stockage électrochimique, en particulier, dans le domaine des accumulateurs lithium ion.

### ÉTAT DE LA TECHNIQUE ANTÉRIEURE

De manière générale, le domaine technique de l'invention peut être défini comme celui des accumulateurs au lithium, plus particulièrement comme celui de la formulation des électrolytes, et plus précisément encore comme celui de la formulation des électrolytes liquides ioniques, c'est-à-dire des solutions comprenant un solvant liquide ionique et un soluté tel qu'un sel conducteur, où des mécanismes de conduction ionique sont mis en jeu.

Si l'on s'intéresse plus particulièrement aux accumulateurs au lithium, un accumulateur au lithium est généralement constitué par :
- deux électrodes, à savoir une électrode positive et une électrode négative. L'électrode positive comprend généralement, en tant que matière électrochimiquement active, des matériaux d'intercalation du lithium tels que des oxydes lamellaires de métaux de transition lithiés, des olivines ou phosphates de fer lithiés (LiFePO₄) ou des spinelles (par exemple le spinelle LiNi_{0,5}Mn_{1,5}O₄). L'électrode négative comprend généralement, en tant que matière électrochimiquement active, du lithium métal dans le cas des accumulateurs primaires, ou des matériaux d'intercalation tels que le carbone graphite (C_{gr}), ou de l'oxyde de titane lithié (Li₄Ti₅O₁₂) dans le cas des accumulateurs basés sur la technologie lithium-ion ;
- des collecteurs de courant, généralement en cuivre pour l'électrode négative, ou en aluminium pour l'électrode positive, qui permettent la circulation des électrons, et donc la conduction électronique, dans le circuit extérieur ;
- un électrolyte où se produit la conduction ionique qui assure le passage des ions lithium d'une électrode à l'autre ;
- un séparateur permettant d'empêcher le contact entre les électrodes et donc les courts-circuits. Ces séparateurs peuvent être des membranes polymères microporeuses.

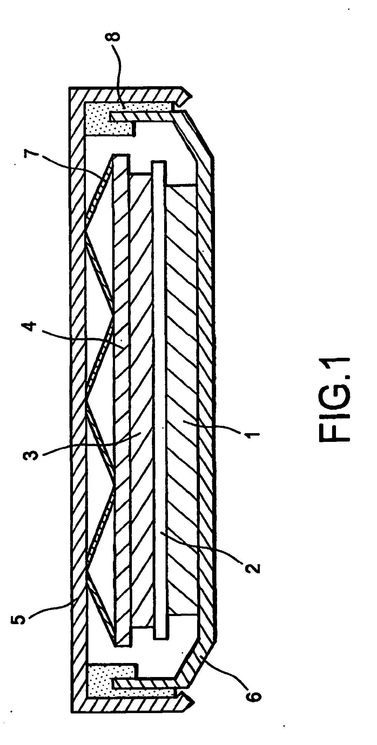

L'accumulateur peut avoir notamment la forme d'une pile bouton telle que décrite sur la figure 1.

Les électrolytes employés dans les accumulateurs lithium ou lithium ion actuels sont des électrolytes liquides constitués d'un mélange de solvants organiques, le plus souvent des carbonates, dans lequel est dissout un sel de lithium.

Les solvants organiques les plus courants sont ainsi des carbonates cycliques ou linéaires, tels que le carbonate d'éthylène (CE, ou EC en anglais), le carbonate de propylène (CP, ou PC en anglais), le carbonate de diméthyle (CDM, ou DMC en anglais), le carbonate de diéthyle (CDE, ou DEC en anglais), et le carbonate de vinylène (CV, ou VC en anglais). Bien que permettant un très bon rendement, ces électrolytes organiques posent des problèmes de sécurité. En effet, ils sont inflammables et volatiles, ce qui peut générer des feux et des explosions dans certains cas. En outre ces électrolytes ne peuvent être utilisés à des températures supérieures à 60°C car, du fait de leur volatilité, ils peuvent provoquer le gonflement de l'accumulateur au lithium et conduire à une explosion de celui-ci.

Les sels de lithium ajoutés aux électrolytes sont le plus souvent choisis parmi les sels suivants :
∘ LiPF₆ : hexafluorophosphate de lithium,
∘ LiBF₄ : tétrafluoroborate de lithium,
∘ LiAsF₆ : hexafluoroarsenate de lithium,
∘ LiClO₄ : perchlorate de lithium,
∘ LiBOB : bis oxalatoborate de lithium,
∘ LiTFSI : bis (trifluorométhylsulfonyl) imide de lithium,
∘ LiBeti : bis (perfluoroéthylsulfonyl) imide de lithium,
∘ LiFSI : bis (fluorosulfonyl) imidure de lithium,
∘ ou les sels de formule générale Li [N (SO₂CₙF₂ₙ₊₁) (SO₂CₘF₂ₘ₊₁)], où n et m identiques ou différents sont des entiers naturels compris entre 1 et 10, préférentiellement entre 1 et 5.

Afin de surmonter les problèmes de sécurité et notamment d'inflammation, et d'accumulation de gaz dus à la faible stabilité thermique, à la pression de vapeur élevée et au faible point éclair des solvants organiques de ces électrolytes liquides, il a été proposé de les remplacer par des liquides ioniques.

On peut définir les liquides ioniques comme des sels liquides comprenant un cation et un anion. Les liquides ioniques sont ainsi généralement composés d'un cation organique volumineux, leur donnant une charge positive, auquel est associé un anion inorganique qui leur donne une charge négative. En outre, les liquides ioniques sont, comme leur nom l'indique, généralement liquides dans l'intervalle de température 0°C à 200°C, notamment autour de la température ambiante, et ils sont ainsi souvent dénommés « RTIL » (ou « Room Temperature Ionic Liquids » en langue anglaise).

La diversité des liquides ioniques est telle qu'il est possible de mettre au point un grand nombre d'électrolytes. Toutefois, il existe des familles de liquides ioniques plus intéressantes. Ces familles sont classées selon le type de cation utilisé. On peut citer notamment les cations suivants :
∘ cation imidazolium di ou tri substitué,
∘ ammonium quaternaire,
∘ dialkyle pipéridinium,
∘ dialkyle pyrrolidinium,
∘ dialkyle pyrazolium,
∘ alkyle pyridinium,
∘ tétra-alkyle phosphonium,
∘ trialkyle sulfonium.

Les anions associés le plus souvent sont des anions ayant une charge délocalisée, tels que BF₄⁻, B(CN)₄⁻, CH₃BF₃⁻, CH₂CHBF₃⁻, CF₃BF₃⁻, m-CₙF₂ₙ₊₁BF₃⁻, PF₆⁻, CF₃CO₂⁻, CF₃SO₃⁻, N(SO₂CF₃)₂⁻, N(COCF₃) (SOCF₃)⁻, N(CN)₂⁻, C(CN)₃⁻, SCN⁻, SeCN⁻, CuCl₂⁻, AlCl₄⁻ etc.

L'électrolyte liquide ionique est alors composé d'un liquide ionique jouant le rôle de solvant et d'un sel conducteur tel qu'un sel de lithium.

Les électrolytes liquides ioniques sont intéressants du point de vue de la sécurité dans toutes sortes d'applications électrochimiques, car ils affichent une grande stabilité thermique -pouvant aller par exemple jusqu'à 450°C pour les mélanges de 1-butyl-3-méthylimidazolium tétrafluoroborate, BMIBF₄, et de LiBF₄-, ils ont une large plage de phase liquide, ils ne sont pas inflammables, et ils ont une tension de vapeur très faible.

Toutefois, il se produit au sein des électrolytes comprenant un mélange de liquides ioniques et de sels conducteurs tels que des sels de lithium, des phénomènes complexes qui sont à l'origine d'un certain nombre de problèmes et d'inconvénients.

Ainsi, lorsque la concentration en sel de lithium augmente, ceci s'accompagne d'une baisse de la conductivité ionique et d'une augmentation de la viscosité. De plus les coefficients de diffusion du lithium dans ces mélanges diminuent pour une teneur en sel de lithium croissante. En fait il se produit une structuration du mélange qui diminue la mobilité des ions lithium.

En outre, il est actuellement impossible d'employer un électrolyte liquide ionique avec une électrode négative en carbone graphite car les électrolytes liquides ioniques ne sont pas très stables aux bas potentiels. Il y a réaction avec l'électrode à bas potentiels, ce qui peut altérer les performances. En fait, il faut faire une couche de passivation qui protège l'électrode de graphite afin de pouvoir l'utiliser. En d'autres termes, soit le liquide ionique n'est pas stable au potentiel de l'électrode négative en carbone graphite (0,1 à 0,3 Vs Li/Li⁺), soit la couche de passivation (ou « solid electrolyte interphase » en anglais) n'est pas de bonne qualité, empêchant ainsi l'accumulateur de fonctionner correctement. Il en résulte que les performances de l'accumulateur, en termes de capacité restituée, sont très faibles et que sa durée de vie est très courte.

Les électrolytes commerciaux employés avec une électrode de graphite sont donc des électrolytes organiques classiques tels que ceux déjà mentionnés plus haut, composés d'un mélange de solvants organiques (binaire ou ternaire) dans lequel est dissout un sel de lithium à une concentration de 1mol/L. Les solvants organiques les plus courants sont des carbonates cycliques ou linéaires déjà cités plus haut.

Dans le cas d'une électrode eh carbone graphite l'électrolyte employé a typiquement la composition suivante : EC/PC/DMC 1:1:3 en masse plus 2 % en masse de VC avec 1 mol/L de LiPF₆. Le VC a pour but de créer une couche de passivation homogène stabilisant l'électrode de graphite et permet ainsi à l'accumulateur de restituer une bonne capacité.

Toutefois on retrouve alors tous les problèmes posés par les électrolytes organiques qui ont déjà été évoqués dans ce qui précède.

On sait notamment qu'à partir de 50°C, les électrolytes organiques ne sont pas stables. En effet ils commencent à se dégrader et donc perdent en conductivité et les performances de la batterie sont réduites au cours des cycles de charge-décharge successifs. De plus ils sont volatiles et donc inflammables à des températures élevées (supérieures à 60°C), et ils peuvent générer des feux et des explosions. Les électrolytes organiques limitent par conséquent la gamme de température d'utilisation des accumulateurs tels que les accumulateurs lithium ion et notamment des accumulateurs lithium ion à électrode négative en carbone graphite.

Afin de permettre la mise en oeuvre d'un électrolyte à base de solvant ionique dans un accumulateur lithium ion, à électrode en graphite le document [1] propose un électrolyte liquide ionique à base de bis (trifuorométhylsulfonyl) imidure de 3-méthylimidazolium (« EMI-TFSI") comprenant de faibles quantités de carbonate de vinylène en tant qu'additif. Il est ainsi possible d'obtenir le cyclage stable d'un accumulateur Graphite -LiCoO₂- avec un électrolyte EMI-TFSI-1M LiPF₆ - 5% de carbonate de vinylène. L'électrolyte de ce document présente cependant certains inconvénients comme une perte de capacité irréversible assez importante au premier cycle, et une baisse des performances après 30 cycles.

Le document [2] concerne des électrolytes liquides ioniques comprenant du bis (trifuorométhylsulfonyl) imidure de N, N-diéthyl-N-méthyl-N-(2-méthoxyéthyl) ammonium (DEME-TFSI) en tant que solvant liquide ionique et du LiTFSI en tant que sel conducteur.

L'addition à ces électrolytes de carbonate de vinylène (VC) ou de carbonate d'éthylène (EC) assure la formation d'une couche de passivation sur l'électrode en graphite et empêche la décomposition de l'électrolyte. Un accumulateur graphite/Li-DEME-TFS avec 10% de VC/LiCoO₂ a été testé et a montré des performances satisfaisantes.

Toutefois, l'électrolyte de ce document subit apparemment une dégradation thermique en deux étapes, la première au voisinage de 100° C, puis la seconde à 300° C. L'électrolyte de ce document est donc loin d'être satisfaisant.

En conclusion, les électrolytes des documents [1] et [2] ne sont pas compatibles avec les électrodes négatives en graphite.

Le document [3] décrit l'addition à des électrolytes liquides ioniques pour accumulateurs au lithium ion, d'additifs organiques permettant d'en modifier la viscosité et d'en accroître la conductivité ionique.

Des exemples de ces composés organiques sont les carbonates organiques. En tant qu'exemples de ces carbonates organiques sont cités les carbonates d'alkyle, tels que les carbonates de dialkyle, les carbonates d'alcényle, les carbonates cycliques et non cycliques, les carbonates organiques fluorés tels que les carbonates de fluoroalkyle, et les autres carbonates organiques halogénés.

Les composés suivants sont plus précisément mentionnés : carbonate d'éthylène, carbonate de propylène, carbonate de butylène, carbonate de méthyle et d'éthyle (« EMC »), carbonate de diéthyle (« DEC »), carbonate de diméthyle (« DMC »), carbonate de dipropyle (« DPC »), carbonate de dibutyle (« DBC »), carbonate d'éthyle (« EC »), carbonate de méthyle et de propyle (« MPC »), carbonate d'éthyle et de propyle («EPC »).

Dans les exemples de ce document, un électrolyte comprenant 60 % en mole de EMI-TFSI et 40% en mole de EMC ou 40 % en mole de EMI-TFSI et 60% en mole de EMC, et 1,25 M du sel de lithium Li-TFSI est utilisé avec du LiCoO₂ en tant que matériau actif de cathode et du Li₄Ti₅O₁₂ en tant que matériau actif d'anode.

Dans les électrolytes cités dans les exemples de ce document, le carbonate ne peut être qualifié d'additif mais plutôt de composant important d'un mélange, à raison de 40 %, voire de 60 % en mole. Il risque donc d'y avoir des problèmes de dégradation thermique.

Le document US-A1-2007/0243463 concerne une batterie rechargeable comprenant une électrode positive, une électrode négative et un électrolyte non-aqueux, dans lequel l'électrolyte non-aqueux comprend un composé omnium, un sel de lithium et un carbonate comportant une double liaison insaturée carbone-carbone.

Le document J. XV et al.: "Additive-containing ionic liquid electrolytes for secondary lithium battery", Journal of Power Sources, 160 (2006) 621-626, concerne un electrolyte liquide ionique comprenant PP13-TFSI, LiTFSI en tant que sel conducteur, et un additif tel que le carbonate d'éthylène (EC).

Il existe donc, au vu de ce qui précède, un besoin pour un accumulateur lithium ion comprenant un électrolyte liquide ionique c'est-à-dire un électrolyte comprenant un liquide ionique jouant le rôle de solvant et un sel conducteur tel qu'un sel de lithium, dans lequel la réaction électrochimique et son rendement ne sont pas affectés de manière négative notamment du fait de l'électrolyte.

Il existe en particulier un besoin pour un accumulateur au lithium ion comprenant un électrolyte liquide ionique, et plus particulièrement pour un accumulateur lithium ion à électrode négative en carbone graphite, qui permette d'obtenir d'excellentes performances notamment en matière de capacité restituée, récupérée, et de durée de vie.

En d'autres termes il existe un besoin pour un accumulateur au lithium ion à électrolyte liquide ionique, qui, tout en présentant tous les avantages des électrolytes liquides ioniques notamment en termes de sécurité d'utilisation, de stabilité thermique, et de caractère non-inflammable, n'en présente pas les inconvénients en ce qui concerne les performances insuffisantes de l'accumulateur, et assure un fonctionnement correct de celui-ci.

Comme on l'a déjà indiqué plus haut, il existe enfin un besoin pour un accumulateur comprenant un électrolyte liquide ionique qui soit compatible avec les électrodes négatives en carbone graphite, ce qui n'est le cas d'aucun des électrolytes liquides ioniques actuellement commercialement disponibles.

### EXPOSÉ DE L'INVENTION

Le but de la présente invention est de fournir un accumulateur rechargeable lithium ion comprenant un électrolyte liquide ionique qui réponde entre autres aux besoins énumérés plus haut.

Le but de la présente invention est encore de fournir un accumulateur rechargeable lithium ion comprenant un électrolyte liquide qui ne présente pas les inconvénients, défauts, limitations et désavantages des accumulateurs rechargeables lithium ion comprenant des électrolytes liquides de l'art antérieur, et qui résolve les problèmes de l'art antérieur.

Ce but, et d'autres encore sont atteints, conformément à l'invention, par un accumulateur rechargeable lithium ion comprenant une électrode négative dont la matière active est du carbone graphite, une électrode positive dont la matière active est du LiFePO₄, et un électrolyte liquide ionique comprenant au moins un liquide ionique de formule C⁺A⁻ où C⁺ représente un cation et A⁻ représente un anion, et au moins un sel conducteur, l'électrolyte liquide ionique comprenant en outre un additif organique qui est le carbonate de vinyléthylène (« vinyl ethylene carbonate » ou « VEC» en anglais).

Un accumulateur rechargeable lithium ion comprenant une électrode négative dont la matière active est du carbone graphite, une électrode positive dont la matière active est du LiFePO₄, et l'électrolyte liquide ionique tel que défini plus haut n'a jamais été décrit dans l'art antérieur.

L'accumulateur lithium ion selon l'invention résulte de la sélection d'une matière active d'électrode négative spécifique, de la sélection d'une matière active d'électrode positive spécifique, et enfin de la sélection d'un électrolyte ionique spécifique. La combinaison de ces trois éléments spécifiques dans un accumulateur au lithium ion n'est ni décrite ni suggérée dans l'art antérieur et conduit de manière inattendue à un accumulateur au lithium ion présentant des propriétés améliorées.

En particulier, l'électrolyte liquide ionique de l'accumulateur selon l'invention se distingue fondamentalement des électrolytes ioniques liquides de l'art antérieur en ce qu'il comprend un additif organique spécifique qui est le carbonate de vinyléthylène (« VEC »).

Dans les documents [1] à [3] cités plus haut, le carbonate de vinyléthylène n'est jamais cité parmi les additifs organiques qui sont ajoutés à des liquides ioniques.

Le document [4] décrit l'addition de VEC à du carbonate de propylène, c'est-à-dire à un solvant organique classique, dans un électrolyte pour un accumulateur au lithium ion à électrode en graphite. L'addition d'un additif à un liquide ionique ne peut en aucune manière se déduire de l'addition de ce même additif à des solvants classiques du fait de la spécificité des liquides ioniques, et l'électrolyte de ce document présente tous les inconvénients des électrolytes organiques classiques.

Dans l'accumulateur selon l'invention, la réaction électrochimique et son rendement ne sont pas affectés par l'électrolyte liquide ionique particulier mis en oeuvre.

La mise en oeuvre de l'électrolyte liquide ionique spécifique décrit plus haut dans un accumulateur lithium ion dont la matière active de l'électrode négative est spécifiquement du carbone graphite, et dont la matière active de l'électrode positive est spécifiquement du LiFePO₄ permet d'obtenir d'excellentes performances notamment en matière de capacité restituée, récupérée, et de durée de vie.

L'électrolyte liquide ionique mis en oeuvre dans l'accumulateur selon l'invention, tout en présentant tous les avantages des électrolytes liquides ioniques notamment en termes de sécurité d'utilisation, de stabilité thermique, et de caractère non-inflammable n'en présente pas les inconvénients en ce qui concerne les performances insuffisantes de l'accumulateur, et assure un fonctionnement correct de celui-ci. De manière surprenante, il a été montré que dans l'accumulateur selon l'invention, l'addition à un électrolyte liquide ionique comprenant un liquide ionique de l'additif spécifique VEC n'altérait en aucune manière la stabilité, notamment la stabilité thermique, de ce liquide ionique qui demeurait inchangée et très élevée. Par exemple, l'électrolyte de l'accumulateur selon l'invention a une stabilité thermique bien meilleure que celle de l'électrolyte du document [2].

Dans l'accumulateur selon l'invention, de manière surprenante, l'électrolyte liquide ionique spécifique utilisé est compatible avec les électrodes négatives en carbone graphite spécifiquement mises en oeuvre, ce qui n'est le cas d'aucun des électrolytes liquides ioniques actuellement commercialement disponibles.

En particulier, l'additif spécifique ajouté permet d'obtenir une couche de passivation d'excellente qualité sur une électrode négative de graphite, alors que cette couche de passivation n'existe pas, ou est de bien moins bonne qualité sans cet additif.

Les performances électrochimiques d'un accumulateur selon l'invention, utilisant l'électrolyte spécifique mentionné plus haut sont améliorées, en particulier en termes de capacité pratique lorsqu'on les compare aux performances d'un accumulateur, utilisant un électrolyte analogue mais sans cet additif.

De même, il s'est avéré que les performances de l'accumulateur selon l'invention, utilisant l'électrolyte spécifique décrit ci-dessus sont améliorées, en particulier en termes de capacité pratique lorsqu'on les compare aux performances d'un accumulateur utilisant un électrolyte analogue mais avec l'additif VC. Les tests effectués avec celui-ci ne se sont pas, en effet, avérés satisfaisants.

De même, les performances d'un accumulateur selon l'invention utilisant l'électrolyte spécifique décrit plus haut sont améliorées, en particulier en termes de capacité pratique lorsqu'on les compare aux performances d'un accumulateur utilisant un électrolyte organique classique tel qu'un électrolyte EC/PC/DMC (proportions en masse 1/1/3) avec du LiPF₆ à 1 mol/L.

Le cation C⁺ du liquide ionique est choisi parmi les imidazoliums non substitués ou substitués tels que les di-, tri-, tétra-et penta-alkyl imidazoliums, les ammoniums quaternaires, les pipéridiniums non substitués ou substitués tels que les dialkylpiperidiniums, et les formes tautomères de ceux-ci.

De préférence le cation C⁺ du liquide ionique est choisi parmi les pipéridiniums tels que les dialkylpipéridiniums ; les ammoniums quaternaires tels que les ammoniums quaternaires portant quatre groupes alkyles ; les imidazoliums tels que les imidazoliums di-, tri-, tétra-, et penta substitués comme les di-, tri-, tétra- et penta-alkyl, imidazoliums ; et les formes tautomères de ceux-ci.

De préférence, le cation C⁺ du liquide ionique est choisi parmi le N, N-propyl-méthylpipéridinium, le 1-hexyl-3-méthylimidazolium, le 1-n-butyl-3-méthylimidazolium et le 1,2-diméthyl-3-n-butylimidazolium.

L'anion A⁻ du liquide ionique est choisi parmi BF₄⁻ et TFSI- (N (SO₂CF₃)₂⁻), le TFSI étant préféré.

Un liquide ionique préférée comprend un cation C⁺ choisi parmi les pipéridiniums, les ammoniums quaternaires et les imidazoliums, associé à un anion choisi parmi BF₄⁻ et TFSI- (N(SO₂CF₃)₂⁻).

Avantageusement le liquide ionique est choisi parmi le PP₁₃TFSI, ou N, N-propyl-méthylpipéridinium bis (trifuorométhanesulfonyl) imidure ; le HMITFSI ou (1-hexyl-3-méthylimidazolium) bis (trifluorométhanesulfonyl) imidure ; le DMBIFSI ou (1,2-diméthyl-3-n-butylimidazolium) bis (trifuorométhanesulfonyl) imidure : le BMITFSI ou (1-n-butyl-3-méthylimidazolium) bis (trifluorométhanesulfonyl) imidure ; et leurs mélanges.

Avantageusement, le sel conducteur est choisi parmi les sels de lithium.

Ainsi, le sel conducteur peut être choisi parmi le LiPF₆ : hexafluorophosphate de lithium, le LiBF₄ : tétrafluoroborate de lithium, le LiAsF₆ : hexafluoroarsenate de lithium, le LiClO₄ : perchlorate de lithium, le LiBOB : bis oxalatoborate de lithium, le LiFSI : bis (fluorosulfonyl) imidure de lithium, les sels de formule générale Li [N (SO₂CₙF₂₊₁) (SO₂CₘF₂ₘ₊₁)]) où n et m identiques ou différents sont des entiers naturels compris entre 1 et 10 tels que le LiTFSI : bis (trifluorométhylsulfonyl) imidure de lithium ou LiN (CF₃SO₂)₂, ou le LiBeti : bis

(perfluoroéthylsulfonyl) imidure de lithium, le LiODBF, le LiB (C₆H₅), le LiCF₃SO₃, le LiC(CF₃SO₂)₃ (LiTFSM), et leurs mélanges.

De préférence, le sel conducteur est choisi parmi LiTFSI, LiPF₆, LiFSI, LiBF₄, et leurs mélanges.

L'électrolyte peut comprendre généralement de 0,1 à 10 mol/L de sel conducteur.

L'électrolyte comprend de 1 à 10 %, de préférence de 2 à 5% en volume, d'additif VEC par rapport au volume du liquide ionique.

Avantageusement, l'électrolyte peut n'être constitué que par le ou les électrolyte(s) ionique(s), le ou les sel(s) conducteur(s) et l'additif organique.

Un électrolyte préféré pour l'accumulateur selon l'invention comprend du LiTFSI dans un solvant liquide ionique choisi parmi le PP₁₃TFSI, le HMITFSI, le DMBITFSI et le BMITFSI ; et de 1 à 10% en volume, de préférence 5% en volume de VEC.

Avantageusement, cet électrolyte préféré comprend 1,6 mol/l de LiTFSI.

Plus précisément, un premier électrolyte particulièrement préféré de l'accumulateur selon l'invention comprend du LiTFSI dans le solvant liquide ionique PP₁₃TFSI ; et de 1 à 10% en volume, de préférence 5% en volume de VEC.

Un deuxième électrolyte particulièrement préféré de l'accumulateur selon l'invention comprend du LiTFSI dans le solvant liquide ionique HMITFSI ; et de 1 à 10% en volume, de préférence 5% en volume de VEC.

Un troisième électrolyte particulièrement préféré de l'accumulateur selon l'invention comprend du

LiTFSI dans le solvant liquide ionique DMBITFSI ; et de 1 à 10% en volume, de préférence 5% en volume de VEC.

Un quatrième électrolyte particulièrement préféré de l'accumulateur selon l'invention comprend du LiTFSI dans le solvant liquide ionique BMITFSI ; et de 1 à 10% en volume, de préférence 5% en volume de VEC.

Avantageusement, chacun de ces quatre électrolytes particulièrement préférés comprend 1,6 mol/l de LiTFSI.

La mise en oeuvre de l'électrolyte décrit plus haut est particulièrement avantageuse avec une électrode négative dont la matière active est du carbone graphite avec laquelle il est totalement compatible et assure d'excellentes performances.

La mise en oeuvre de cet électrolyte est encore plus avantageuse si en outre, l'électrode positive comprend du LiFePO₄ en tant que matière active.

L'accumulateur selon l'invention peut être une pile bouton.

L'invention concerne donc en outre un électrolyte liquide comprenant du LiTFSI, de préférence à raison de 1,6 mol/l, dans un solvant liquide ionique choisi parmi le PP₁₃TFSI, le HMITFSI, le DMBITFSI, et le BMITFSI ; et de 1 à 10% en volume, de préférence 5% en volume de VEC.

L'invention va maintenant être décrite de manière plus précise dans la description qui suit, donnée à titre illustratif et non limitatif, en référence aux dessins joints dans lesquels :
- La Figure 1 est une vue schématique en coupe verticale d'un accumulateur sous forme de pile bouton comprenant un électrolyte, par exemple un électrolyte à tester, mis en oeuvre selon l'invention, tel que l'électrolyte préparé dans l'Exemple 1 ou dans l'Exemple 2, ou bien un électrolyte comparatif.

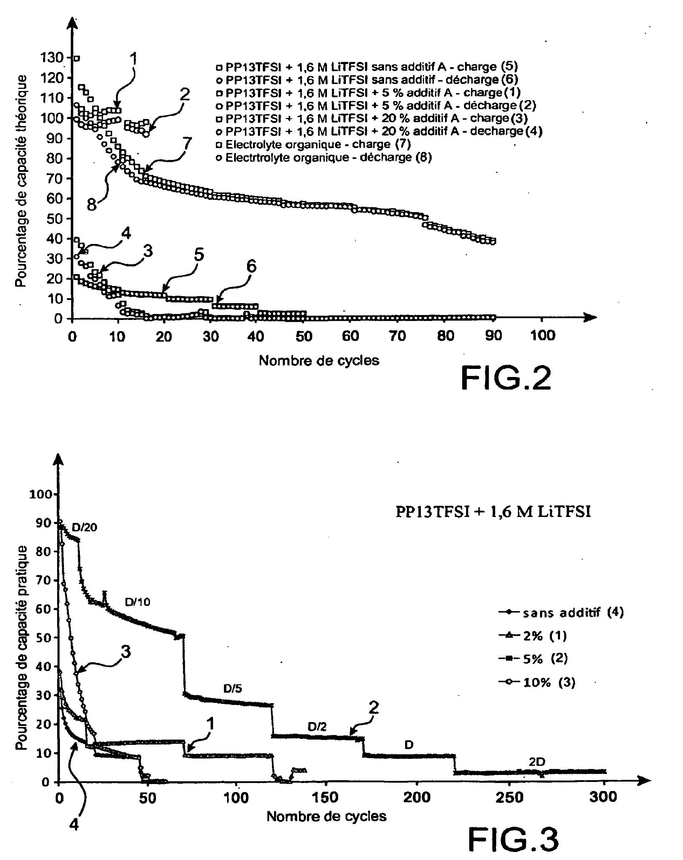

- La Figure 2 est un graphique qui compare les performances en cyclage pour un électrolyte mis en oeuvre PP₁₃TFSI + 1,6 M LiTFSI avec respectivement 5% d'additif VEC (courbe 1 : charge : courbe 2 : décharge), 20 % d'additif VEC (courbe 3 : charge ; courbe 4 : décharge) ; pour un électrolyte comparatif PP₁₃TFSI + 1,6 M LiTFSI sans additif organique (courbe 5 : charge ; courbe 6 : décharge) ; et pour un électrolyte organique "ORG" (courbe 7 : charge ; courbe 8 : décharge). En abscisse est porté le nombre de cycles et en ordonnée est porté le pourcentage de capacité théorique.
- La Figure 3 est un graphique qui compare les performances en cyclage pour un électrolyte mis en oeuvre selon l'invention PP₁₃TFSI + 1,6 M LiTFSI avec respectivement 2% d'additif VEC (courbe 1), 5% d'additif VEC (courbe 2), et 10% d'additif VEC (courbe 3), et pour un électrolyte comparatif PP₁₃TFSI + 1,6 M LiTFSI sans additif organique (courbe 4). En abscisse est porté le nombre de cycles et en ordonnée est porté le pourcentage de capacité pratique.

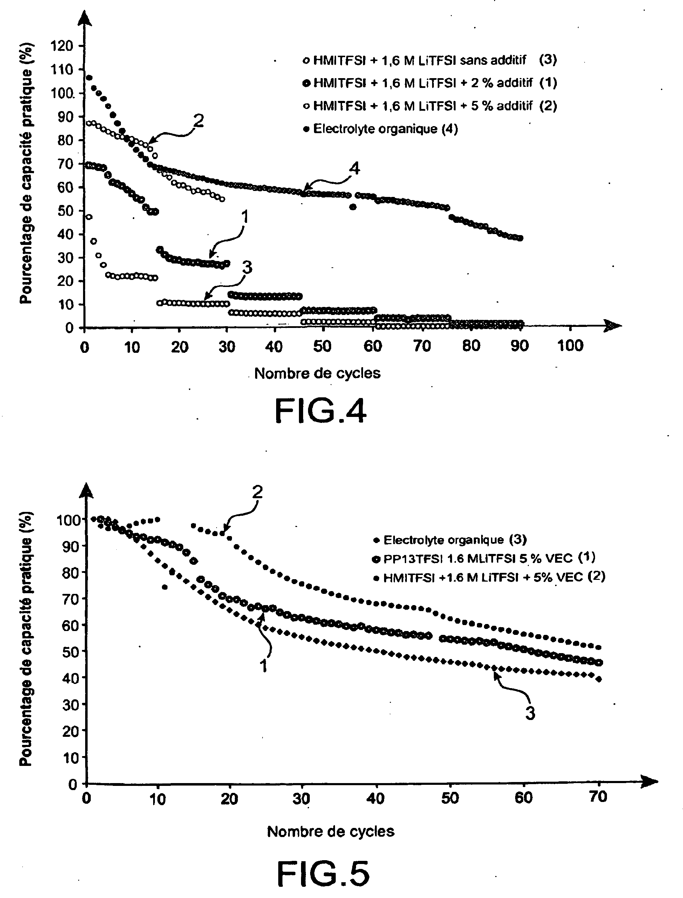

- La Figure 4 est un graphique qui compare les performances en cyclage pour un électrolyte mis en oeuvre selon l'invention HMITFSI+1,6 M LiTFSI avec respectivement 2% d'additif VEC (courbe 1), et 5% d'additif VEC (courbe 2) ; pour un électrolyte comparatif HMITFSI + 1,6 M LiTFSI sans additif organique (courbe 3) ; et pour un électrolyte organique "ORG" (courbe 4). En abscisse est porté le nombre de cycles et en ordonnée est porté le pourcentage de capacité pratique.
- La Figure 5 est un graphique qui compare les performances en cyclage pour un électrolyte mis en oeuvre selon l'invention PP13TFSI+1,6 M LiTFSI avec 5% d'additif VEC (courbe 1) ; pour un électrolyte mis en oeuvre selon l'invention HMITFSI + 1,6 M LiTFSI avec 5% d'additif VEC (courbe 2) ; et pour un électrolyte organique "ORG" (courbe 3). En abscisse est porté le nombre de cycles et en ordonnée est porté le pourcentage de capacité pratique.

Cette description se réfère généralement plus particulièrement à un mode de réalisation qui a trait à un accumulateur lithium ion selon l'invention dans lequel l'électrode négative est une électrode dont la matière active est du carbone graphite et l'électrode positive est une électrode dont la matière active est du LiFePO₄, et l'électrolyte liquide est l'électrolyte liquide spécifique décrit plus haut.

La mise en oeuvre de cet électrolyte spécifique s'est avérée particulièrement avantageuse dans ce type d'accumulateur selon l'invention.

L'électrolyte liquide ionique spécifique de l'accumulateur selon l'invention comprend au moins un liquide ionique, jouant le rôle de solvant, de formule C⁺A⁻ où C⁺ représente un cation et A⁻ représente un anion, au moins un sel conducteur, et en outre au moins un additif qui est le carbonate de vinyléthylène.

Par au moins un liquide ionique on entend que l'électrolyte de l'accumulateur selon l'invention peut comprendre un seul liquide ionique ou qu'il peut comprendre plusieurs de ces liquides ioniques qui peuvent différer par exemple par la nature du cation et/ou de l'anion les constituant.

De même, par au moins un sel conducteur, on entend que l'électrolyte de l'accumulateur selon l'invention peut comprendre un seul ou plusieurs sel(s) conducteur (s).

Le liquide ionique de l'électrolyte de l'accumulateur selon l'invention joue le rôle de solvant pour le sel conducteur. Par « liquide » on entend généralement que le solvant liquide ionique est liquide dans une plage de température de 0 à 200°C, et qu'il est notamment liquide au voisinage de la température ambiante à savoir de 15 à 30°C, de préférence de 20 à 25°C.

Le liquide ionique de l'électrolyte ionique de l'accumulateur selon l'invention est généralement thermiquement stable jusqu'à une température pouvant atteindre 450°C par exemple.

Il a été constaté de manière surprenante que l'électrolyte liquide ionique de l'accumulateur selon l'invention était également thermiquement stable jusqu'à des températures aussi élevées, ce qui signifie que l'addition de l'additif organique n'altère pas la stabilité thermique de l'électrolyte liquide ionique qui a globalement une stabilité thermique comparable à celle, élevée, du solvant ionique.

Par exemple alors que le VEC seul se dégrade à 230°C, des analyses de thermogravimétrie réalisées sur l'électrolyte liquide ionique avec l'additif spécifique VEC selon l'invention ont montré que cet électrolyte était stable jusqu'à 450°C.

Le cation C⁺ du liquide ionique de l'électrolyte selon l'invention sera choisi parmi les imidazoliums non substitués ou substitués tels que les di-, tri-, tétra- et penta-alkyl imidazoliums, les ammoniums quaternaires, et les pipéridiniums non substitués ou substitués tels que les dialkylpipéridiniums.

Le cation C⁺ du liquide ionique est choisi parmi les pipéridiniums tels que les dialkylpipéridiniums, les ammoniums quaternaires tels que les ammoniums quaternaires portant quatre groupes alkyles, et les imidazoliums tels que les imidazoliums di-, tri-, tetra-, et penta substitués comme les di-, tri-, tétra- et penta-alkyl, imidazoliums.

Les groupes alkyle ont de 1 à 20 C et peuvent être linéaires ou ramifiés.

Dans la présente lorsqu'une substitution par plusieurs groupes alkyle est mentionnée (« dialkyl », « trialkyl » etc....) ces groupes alkyle peuvent être identiques ou différents.

Parmi ces cations les dialkylpipéridinium, les ammoniums quaternaires portant quatre groupes alkyles, et les di-, tri-, tétra- et penta-alkyl, imidazoliums sont particulièrement préférés. Toutefois, en ce qui concerne les cations imidazolium, les imidazolium di- et tri- substitués présentent de meilleures propriétés physico-chimiques et électrochimiques et sont donc encore plus préférés.

Ces cations ont été sélectionnés car le cation imidazolium possède les conductivités ioniques les plus grandes ainsi que la plus faible viscosité. Le cation pipéridinium montre lui une très grande stabilité électrochimique et des grandeurs de conductivité ionique et de viscosité moyenne. Enfin, Les ammoniums quaternaires sont très stables électrochimiquement mais présentent des conductivités ioniques très faibles.

Les cations préférés entre tous sont choisis parmi le N, N-propyl-méthylpipéridinium, le 1-hexyl-3-méthylimidazolium, le 1-n-butyl-3-méthylimidazolium et le 1,2 diméthyl-3-n-butylimidazolium car il s'est avéré qu'avec ces trois cations spécifiques choisis parmi un très grand nombre de cations possibles d'excellentes propriétés, et des performances étonnamment améliorées étaient obtenues. Ces cations présentent notamment l'avantage d'être inertes vis-à-vis du matériau d'électrode positive LiFePO₄ de l'accumulateur selon l'invention.

L'anion A⁻ du liquide ionique est choisi parmi les anions BF₄-et TFSI- (N(SO₂CF₃)₂-).

Ces anions permettent en effet d'augmenter la conductivité ionique et de diminuer la viscosité. De plus l'anion TFSI⁻ est légèrement plus stable à haut potentiel.

Le liquide ionique pour l'électrolyte liquide ionique de l'accumulateur selon l'invention comprend en tant qu'anion un anion BF₄⁻ ou TFSI-(N(SO₂CF₃)₂⁻) et en tant que cation un cation pipéridinium, ammonium quaternaire ou imidazolium. L'association d'un tel anion et d'un tel cation communique à l'électrolyte liquide ionique des propriétés extrêmement avantageuses.

Avantageusement, le liquide ionique est choisi parmi le PP₁₃TFSI, ou N, N-propyl-méthylpipéridinium bis (trifuorométhanesulfonyl) imidure ; le HMITFSI ou (1-hexyl-3-méthylimidazolium) bis (trifuorométhanesulfonyl) imidure ; le DMBIFSI ou (1,2-diméthyl-3-n-butylimidazolium) bis (trifuorométhanesulfonyl) imidure ; le BMITFSI ou (1-n-butyl-3-méthylimidazolium) bis (trifuorométhanesulfonyl) imidure ; et leurs mélanges.

Le PP₁₃TFSI répond à la formule suivante :

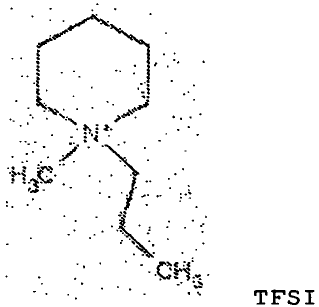

Ces liquides ioniques qui comprennent l'association d'un cation spécifique et - d'un anion spécifique présentent des propriétés étonnamment avantageuses, et notamment une meilleure stabilité du cation en réduction.

Il n'existe aucune limitation quant au choix du sel conducteur de l'électrolyte liquide ionique de l'accumulateur selon l'invention.

Le sel conducteur est de préférence un sel de lithium qui convient particulièrement bien pour l'électrolyte de l'accumulateur rechargeable au lithium ion selon l'invention.

Ce sel de lithium peut être choisi parmi le LiPF₆ : hexafluorophosphate de lithium, le LiBF₄ : tétrafluoroborate de lithium, le LiAsF₆ : hexafluoroarsenate de lithium, le LiClO₄ : perchlorate de lithium, le LiBOB : bis oxalatoborate de lithium, le LiFSI : bis (fluorosulfonyl) imidure de lithium, les sels de formule générale Li [N (SO₂CₙF₂ₙ₊₁) (SO₂CₘF₂ₘ₊₁)] où n et m identiques ou différents sont des entiers naturels compris entre 1 et 10, tels que le LiTFSI : bis (trifluorométhylsulfonyl) imidure de lithium ou LiN (CF₃SO₂)₂, ou le LiBeti : bis (perfluoroéthylsulfonyl) imidure de lithium, le LiODBF, le LiB(C₆H₅), le LiCF₃SO₃, le LiC(CF₃SO₂)₃ (LiTFSM), et leurs mélanges.

Les sels de lithium à ajouter dans les liquides ioniques sont préférentiellement, dans l'ordre : LiTFSI, LiPF₆, LiFSI, LiBF₄.

En effet, les meilleures conductivités ioniques sont obtenues pour ces sels, et de plus avec LiTFSI la viscosité est la plus faible.

La concentration totale du ou des sels conducteur(s) dans les liquides ioniques peut être comprise entre 0,1 mol/l par litre de solvant liquide ionique jusqu'à leur limite de solubilité dans le solvant liquide ionique choisi, de préférence elle est de 0,1 à 10 mol/l.

L'additif organique spécifique peut être considéré comme le constituant essentiel, fondamental de l'électrolyte de l'accumulateur selon l'invention car c'est le constituant qui différencie l'électrolyte de l'accumulateur selon l'invention des électrolytes des accumulateurs de l'art antérieur et c'est cet additif qui est à l'origine des propriétés surprenantes et avantageuses de l'électrolyte de l'accumulateur selon l'invention notamment en termes de capacité récupérée.

Cet additif organique est le carbonate de vinyléthylène ou 4-vinyl-1, 3-dioxolane-2-one qui répond à la formule suivante :
Formule du VEC :

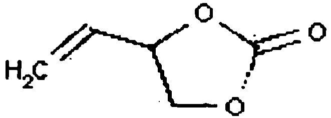

L'électrolyte de l'accumulateur selon l'invention comprend de 1 à 10 %, de préférence de 2 à 5% en volume, d'additif par rapport au volume de liquide ionique. Une amélioration des performances est obtenue dans la plage de 1 à 10% précitée, et ce même avec l'addition d'un faible pourcentage d'additif, tel que 1% en volume, toutefois les meilleures performances sont obtenues dans la plage étroite de 2 à 5% en volume et le pourcentage optimal est de 5% en volume pour lequel les meilleures performances et améliorations sont obtenues.

L'électrolyte de l'accumulateur selon l'invention peut ne contenir que le ou les liquide(s) ionique (s), que le ou les sel (s) conducteur (s) et que l'additif organique, en d'autres termes l'électrolyte peut être constitué par le ou les liquide (s) ionique(s), le ou les sel (s) conducteur(s) et l'additif organique.

Un électrolyte préféré de l'accumulateur selon l'invention comprend du LiTFSI dans un solvant liquide ionique choisi parmi le PP₁₃TFSI, le HMITFSI, le DMBITFSI, et le BMITFSI ; et de 1 à 10% en volume, de préférence 5% en volume de VEC.

Avantageusement, cet électrolyte préféré comprend 1,6 mol/l de LiTFSI.

Un premier électrolyte particulièrement préféré de l'accumulateur selon l'invention comprend du LiTFSI, de préférence 1,6 mol/l de LiTFSI, dans le solvant liquide ionique PP₁₃TFSI ; et de 1 à 10% en volume, de préférence 5% en volume de VEC.

Un deuxième électrolyte particulièrement préféré de l'accumulateur selon l'invention comprend du LiTFSI, de préférence 1,6 mol/l de LiTFSI, dans le solvant liquide ionique HMITFSI ; et de 1 à 10% en volume, de préférence 5% en volume de VEC.

Un troisième électrolyte particulièrement préféré de l'accumulateur selon l'invention comprend du LiTFSI, de préférence 1,6 mol/l de LiTFSI, dans le solvant liquide ionique DMBITFSI ; et de 1 à 10% en volume, de préférence 5% en volume de VEC.

Un quatrième électrolyte particulièrement préféré de l'accumulateur selon l'invention comprend du LiTFSI, de préférence 1,6 mol/l de LiTFSI, dans le solvant liquide ionique BMITFSI ; et de 1 à 10% en volume, de préférence 5% en volume de VEC.

Il s'est avéré de manière étonnante que l'électrolyte préféré selon l'invention comprenant un solvant ionique particulier, un sel conducteur particulier et un additif organique spécifique à savoir le VEC, présentait un ensemble de propriétés inattendues et remarquables, notamment lorsqu'il était mis en oeuvre dans l'accumulateur selon l'invention.

Chacun des quatre électrolytes particulièrement préférés présente de même, de manière inattendue, un ensemble de propriétés remarquables et de manière encore plus marquée, notamment lorsqu'ils sont mis en oeuvre dans l'accumulateur selon l'invention.

Rien ne pouvait laisser prévoir qu'en choisissant un solvant liquide ionique particulier parmi tous les solvants liquides ioniques existants, un sel conducteur particulier tel que le LiTFSI parmi tous les sels conducteurs connus, en utilisant comme additif organique spécifiquement le VEC, et en outre en sélectionnant éventuellement des proportions spécifiques pour chacun de ces composants, par exemple une teneur en VEC de 1 à 10% en volume et une teneur en LiTFSI de 1,6 mol/l, il serait possible d'obtenir une telle combinaison de propriétés.

L'électrolyte préféré et chacun des quatre électrolytes particulièrement préférés résultent au moins d'une triple voire quadruple, quintuple ou sextuple sélection.

L'électrolyte préféré et chacun des quatre électrolytes particulièrement préférés présentent des performances remarquables dans les accumulateurs au lithium notamment en matière de capacité et de capacité pratique récupérée, ces performances sont supérieures à celles d'un électrolyte organique par exemple de 15 à 30%.

Ces performances sont également, de manière étonnante, supérieures à celles de l'électrolyte liquide ionique sans additif.

L'électrolyte préféré et les quatre électrolytes particulièrement préférés sont stables jusqu'à de très hautes températures par exemple jusqu'à 450°C, ils ne sont pas inflammables au-dessus de 50°C et ils peuvent fonctionner sans problème à de telles températures, en effet tous leurs constituants sont compatibles pour une mise en oeuvre à ces températures.

L'accumulateur électrochimique rechargeable au lithium ion comprend, outre l'électrolyte liquide ionique tel que défini plus haut, une électrode négative dont la matière active est du carbone graphite et une électrode positive dont la matière active est du LiFePO₄.

Les électrodes comprennent un liant qui est généralement un polymère organique, une matière électrochimiquement active d'électrode positive ou négative, éventuellement un ou des additif(s) conducteur(s) électronique(s), et un collecteur de courant.

Dans l'électrode positive, la matière électrochimiquement active peut être choisie parmi les olivines LiFePO₄.

Dans l'électrode négative, la matière électrochimiquement active peut être choisie parmi les composés carbonés tels que les graphites naturels ou synthétiques et les carbones désordonnés.

L'additif conducteur électronique éventuel peut être choisi parmi les particules métalliques telles que les particules d'Ag, le graphite, le noir de carbone, les fibres de carbone, les nanofils de carbone, les nanotubes de carbone et les polymères conducteurs électroniques, et leurs mélanges.

Il s'est avéré conformément à l'invention que l'électrolyte liquide ionique spécifique décrit plus haut convenait particulièrement bien à une mise en oeuvre dans un accumulateur lithium ion dans lequel l'électrode négative est spécifiquement une électrode dont la matière active est du carbone graphite et l'électrode positive est spécifiquement une électrode dont la matière active est du LiFePO₄. En effet, de manière surprenante, l'ajout à un électrolyte liquide ionique d'un additif organique spécifique permet pour la première fois l'utilisation d'un électrolyte liquide ionique, constitué essentiellement d'un solvant ionique avec une telle électrode négative en carbone graphite, tout en obtenant un accumulateur avec d'excellentes performances et une longue durée de vie. Il était auparavant considéré qu'il était impossible d'utiliser un électrolyte liquide ionique avec une électrode en carbone graphite, et à cet égard l'invention va à l'encontre d'un préjugé largement répandu dans ce domaine technique et triomphe de ce préjugé. Ces effets particulièrement surprenants et avantageux liés à la mise en oeuvre dans l'électrolyte liquide ionique de l'accumulateur selon l'invention d'un additif spécifique peuvent être expliqués par le fait que l'additif agit sur la surface de l'électrode de graphite en y déposant une couche de passivation stable, faiblement résistive et homogène.

Les collecteurs de courant sont généralement en cuivre pour l'électrode négative, ou en aluminium pour l'électrode positive.

L'accumulateur peut avoir notamment la forme d'une pile bouton.

Les différents éléments d'une pile bouton, en acier inoxydable 316L, sont décrits sur la figure 1.

Ces éléments sont les suivants :
- les parties supérieure (5) et inférieure (6) du boîtier en inox,
- le joint en polypropylène (8),
- les cales en inox (4), qui servent à la fois éventuellement à la découpe du lithium métal puis, plus tard, à assurer le bon contact des collecteurs de courant avec les parties externes de la pile,
- un ressort (7), qui assure le contact entre tous les éléments,
- un séparateur microporeux (2),
- des électrodes (1) (3).

L'invention va maintenant être décrite en référence aux exemples suivants, donnés à titre illustratif et non limitatif.

### Exemple 1 :

On prépare des électrolytes comprenant un liquide ionique, un sel de lithium et un additif organique.
∘ le liquide ionique est le PP₁₃TFSI, ou N, N propyl-méthylpipéridinium bis (trifluorométhanesulfonyl) imidure ;
∘ le sel de lithium est le LiTFSI ;
∘ l'additif organique est le carbonate de vinyléthylène.

Les électrolytes sont formulés en dissolvant 1,6 mol/l de LiPF₆ dans le solvant liquide ionique, puis en ajoutant respectivement 2%, 5%, 10% et 20% en volume d'additif organique : il s'agit de 2 %, 5 %, 10 % ou 20 % par rapport au volume de liquide ionique ajouté à la poudre de sel de lithium.

### Exemple 2 :

On prépare des électrolytes conformes à celui mis en oeuvre selon l'invention comprenant un liquide ionique, un sel de lithium et un additif organique.
∘ le liquide ionique est le HMITFSI ou 1-hexyl-3-méthylimidazolium bis (trifuorométhanesulfonyl) imidure.
∘ le sel de lithium est le LiTFSI, ou hexafluorophosphate de lithium.
∘ l'additif organique est le carbonate de vinyléthylène (« vinyl ethylene carbonate » ou « VEC » en anglais).

L'électrolyte est formulé en dissolvant 1,6 mol/l de LiTFSI dans le solvant liquide ionique puis en ajoutant respectivement 2 et 5 % en masse d'additif organique.

Les électrolytes préparés ci-dessus dans les Exemples 1 et 2 ont ensuite été testés en cellule format pile bouton.

On a également testé en cellule format pile bouton un premier électrolyte comparatif qui est un électrolyte organique classique "ORG" qui contient du EC (éthylène carbonate), du PC (Propylène carbonate) et du DMC (Diméthyl carbonate) dans les proportions massiques de 1/1/3 respectivement. Dans ces solvants, on ajoute ensuite 1 mol/L de LiPF₆. Et à l'ensemble constitué par les solvants organiques et le sel de lithium, on ajoute 2 % en masse de VC.

On a aussi testé de la même manière en format pile bouton, un deuxième et un troisième électrolyte comparatifs qui sont des électrolytes identiques à ceux des exemples 1 et 2 mais sans additif. IL s'agit des électrolytes PP₁₃TFSI + 1,6 M LiTFSI ou HMITFSI + 1,6 M LiTFSI.

Chaque pile bouton est montée en respectant scrupuleusement le même protocole. Sont ainsi empilés à partir du fond du boîtier de la pile comme cela est montré sur la figure 1 :
- une électrode négative (1) Ø 14 mm, il s'agit pour ces tests d'une électrode dont la matière active est du Carbone graphite dans laquelle s'insère le lithium au cours du fonctionnement de l'accumulateur, l'électrode est en outre constituée par un liant polymère et par des conducteurs électroniques ;
- 200 µl d'électrolyte tel que préparé dans l'exemple 1 ou dans l'exemple 2 ;
- un séparateur qui est une membrane microporeuse en polyoléfine, plus précisément une membrane microporeuse en polypropylène Celgard^{®} (2) Ø 16,5 mm ;
- une électrode positive dont la matière active est du LiFePO₄ ;
- un disque ou cale en inox (4),
- un couvercle en inox (5) et un fond en inox (6) ;
- un ressort en inox (7) et un joint en polypropylène (8).

Le boîtier en inox est alors fermé à l'aide d'une sertisseuse, le rendant parfaitement étanche à l'air. Pour vérifier si les piles sont opérationnelles, celles-ci sont contrôlées par la mesure de la tension à l'abandon.

Du fait de la forte réactivité du lithium et de ses sels à l'oxygène et à l'eau, la mise en pile bouton se fait en boîte à gants. Celle-ci est maintenue en légère surpression sous atmosphère d'argon anhydre. Des capteurs permettent de surveiller continuellement la concentration en oxygène et en eau. Typiquement, ces concentrations doivent rester inférieures à la ppm.

Les électrolytes préparés dans les exemples 1 et 2 montés dans des piles boutons qui sont des piles boutons conformes à l'invention et les électrolytes comparatifs montés dans des piles boutons qui ne sont pas conformes à l'invention, conformément à la procédure décrite ci-dessus subissent des cyclages, c'est-à-dire des charges et des décharges à différents régimes à courant constant pendant un nombre déterminé de cycles, pour évaluer la capacité pratique de la pile.

Par exemple une batterie qui charge en régime C/20 est une batterie à laquelle on impose un courant constant pendant 20 heures dans le but de récupérer toute sa capacité C. La valeur du courant est égale à la capacité C divisée par le nombre d'heures de charge, à savoir dans ce cas 20 heures.

Un premier protocole de test est donc réalisé selon le cyclage suivant avec au total trois cents cycles (Figure 3) :
- 15 cycles de charge-décharge C/20 (charge en 20 heures, décharge en 20 heures),
- 55 cycles de charge et décharge à C/10,
- 50 cycles de charge-décharge à C/5,
- 50 cycles de charge-décharge à C/2,
- 50 cycles à C,
- 80 cycles à 2C (charge en 30 minutes).

- Un second protocole de test est réaliste selon le cyclage suivant avec au total 90 cycles (Figure 4) :
- 15 cycles à C/20,
- 15 cycles à C/10,
- 15 cycles à C/5,
- 15 cycles à C/2,
- 15 cycles à C,
- 15 cycles à 2C.

Sur la Figure 2, toutes les courbes ont pour origine 10 cycles à C/20 ; 10 cycles à C/10 ; 10 cycles à C/5 ; 10 cycles à C/2 ; 10 cycles à C sauf pour "ORG" dont la courbe est identique à celle de la Figure 4 en termes de cyclage.

Pour la Figure 5, on utilise 15 cycles à C/20 puis 55 cycles à C/10.

La température de test est de 60°C.

Les résultats de ces tests et cyclages sont donnés sur les figures 2 à 5.

La figure 2 montre que l'ajout de 5% d'additif améliore les performances des piles boutons selon l'invention vis-à-vis des piles boutons non conformes à l'invention avec des électrolytes liquides ioniques sans additif.

La figure 3 montre un gain de 80% en capacité pour une pile bouton selon l'invention avec un électrolyte comprenant 5% de VEC en volume par rapport à une pile bouton non conforme à l'invention avec un électrolyte sans additif, et une récupération de 98% (avec 5% de VEC) de la capacité pratique au lieu de 20% pour la pile bouton avec l'électrolyte sans additif.

De plus, cette figure montre que 5 % d'additif est le pourcentage optimal.

La figure 4 montre que les piles boutons selon l'invention avec des électrolytes liquides ioniques avec additif sont plus performantes que les piles boutons avec l'électrolyte organique classique "ORG" à 60°C.

La figure 5 montre que les piles boutons selon l'invention avec les électrolytes PP₁₃TFSI + 1,6 M LiTFSI et 5% en volume de VEC et HMITFSI + 1,6 M LiTFSI et 5% en volume de VEC ont de meilleures performances que les piles boutons avec l'électrolyte organique à 60°C et offrent un gain de performance de 15 à 30% par rapport aux performances des électrolytes organiques.

### RÉFÉRENCES

[1] M. HOLZAPFEL et al., Chem. Commun., 2004, 2098-2099
[2] T. SATO et al., Journal of Power Sources, 138 (2004) 253 - 261
[3] WO-A2-2005/117175
[4] Y. Hu et al., Electrochemistry Communications, 6 (2004), 126 - 131

## Revendications

1. Accumulateur rechargeable lithium ion comprenant une électrode négative dont la matière active est du carbone graphite, une électrode positive dont la matière active est du LiFePO₄, et un électrolyte liquide ionique comprenant au moins un liquide ionique de formule C⁺A⁻ où C**⁺** représente un cation et A⁻ représente un anion, et au moins un sel conducteur, l'électrolyte liquide ionique comprenant en outre un additif organique qui est le carbonate de vinyléthylène (« vinyl ethylene carbonate » ou « VEC» en anglais) ; dans lequel le liquide ionique comprend un cation C⁺ choisi parmi les pipéridiniums, les ammoniums quaternaires, les imidazoliums, et leurs formes tautomères, associé à un anion A⁻ choisi parmi le BF₄⁻ et le bis(trifluorométhanesulfonyl) imidure TFSI (N(SO₂CF₃)₂⁻) ; de préférence le liquide ionique est choisi parmi le PP₁₃TFSI, ou N, N-propyl-méthylpipéridinium bis (trifuorométhanesulfonyl) imidure ; le HMITFSI ou (1-hexyl-3-méthylimidazolium) bis (trifuorométhanesulfonyl) imidure ; le DMBITFSI ou (1,2-diméthyl-3-n-butylimidazolium) bis (trifuorométhanesulfonyl) imidure ; le BMITFSI ou (1-n-butyl-3-méthylimidazolinium) bis (trifluorométhanesulfonyl) imidure ; et leurs mélanges ; et dans lequel l'électrolyte comprend de 1 à 10 %, de préférence de 2 à 5% en volume, d'additif ; par rapport au volume du liquide ionique.

2. Accumulateur rechargeable lithium ion selon la revendication 1, dans lequel le sel conducteur est choisi parmi les sels de lithium ; de préférence le sel conducteur est choisi parmi le LiPF₆ : hexafluorophosphate de lithium, le LiBF₄ : tétrafluoroborate de lithium, le LiAsF₆ : hexafluoroarsenate de lithium, le LiClO₄ : perchlorate de lithium, le LiBOB : bis oxalatoborate de lithium, le LiFSI : bis (fluorosulfonyl) imidure de lithium, les sels de formule générale Li [N (SO₂CnF₂ₙ₊₁) (SO₂CₘF₂ₘ₊₁)]) où n et m identiques ou différents sont des entiers naturels compris entre 1 et 10, tels que le LiTFSI : bis (trifluorométhylsulfonyl) imidure de lithium ou LiN(CF₃SO₂)₂, ou le LiBeti : bis (perfluoroéthylsulfonyl) imidure de lithium, le LiODBF, le LiB(C₆H₅), le LiCF₃SO₃, le LiC(CF₃SO₂)₃ (LiTFSM), et leurs mélanges.

3. Accumulateur rechargeable lithium ion selon la revendication 2, dans lequel le sel conducteur est le LiTFSI.

4. Accumulateur rechargeable lithium ion selon l'une quelconque des revendications précédentes dans lequel l'électrolyte comprend de 0,1 à 10 mol/L de sel conducteur.

5. Accumulateur rechargeable lithium ion selon l'une quelconque des revendications précédentes dans lequel l'électrolyte **liquide ionique** est constitué par le ou les **liquide(s)** ionique(s), le ou les sel(s) conducteur(s) et l'additif **organique.**

6. Accumulateur rechargeable lithium ion selon l'une quelconque des revendications précédentes dans lequel l'électrolyte comprend du LiTFSI, de préférence à raison de 1,6 mol/l, dans un solvant liquide ionique choisi parmi le PP₁₃TFSI, le HMITFSI, le DMBITFSI, et le BMITFSI ; et de 1 à 10% en volume, de préférence 5% en volume de VEC.

7. Accumulateur rechargeable lithium ion selon l'une quelconque des revendications précédentes qui est une pile bouton.

8. Electrolyte liquide ionique comprenant du LiTFSI dans un solvant liquide ionique choisi parmi le PP₁₃TFSI, le HMITFSI, le DMBITFSI, et le BMITFSI ; et de 1 à 10% en volume, de préférence 5% en volume de VEC.

9. Electrolyte liquide ionique selon la revendication 8 comprenant 1,6 mol/l de LiTFSI.

## Patentansprüche

1. Wiederaufladbarer Lithiumionenakkumulator umfassend eine negative Elektrode, deren aktives Material Graphitkohlenstoff ist, eine positive Elektrode, deren aktives Material LiFePO₄ ist, und einen flüssigen, ionischen Elektrolyten, der wenigstens eine ionische Flüssigkeit der Formel C⁺A⁻, worin C⁺ ein Kation bedeutet und A⁻ ein Anion bedeutet, und wenigstens ein Leitsalz, wobei der flüssige, ionische Elektrolyt außerdem ein organisches Additiv umfasst, das aus Vinylethylencarbonat ("vinyl ethylene carbonate" oder "VEC" in Englisch) besteht, bei dem die ionische Flüssigkeit ein aus Piperidinium, quaternärem Ammonium, Imidazolium und deren tautomeren Formen ausgewähltes Kation C⁺ umfasst, das mit einem aus BF₄⁻ und Bis(trifluormethansulfonyl)imid TFSI (N(SO₂CF₃)₂⁻) ausgewählten Anion A⁻ verbunden ist, und die organische Flüssigkeit vorzugsweise aus PP₁₃TFSI oder N,N-Propyl-methylpiperidiniumbis(trifluormethansulfonyl)imid, HMITFSI oder (1-Hexyl-3-methylimidazo-lium)bis(trifluormethansulfonyl)imid, DMBITFSI oder (1,2-Dimethyl-3-n-butylimidazolium)-bis(trifluormethansulfonyl)imid, BMITFSI oder (1-n-Butyl-3-methylimidazolinium)bis(trifluormethansulfonyl)imid und ihren Gemischen ausgewählt ist, und bei dem der Elektrolyt 1 bis 10 Vol.-%, vorzugsweise 2 bis 5 Vol.-% Additiv bezogen auf das Volumen der ionischen Flüssigkeit umfasst.

2. Wiederaufladbarer Lithiumionenakkumulator gemäß Anspruch 1, bei dem das Leitsalz aus Lithiumsalzen ausgewählt ist und das Leitsalz vorzugsweise aus LiPF₆: Lithiumhexafluorphosphat, LiBF₄: Lithiumtetrafluorborat, LiAsF₆: Lithiumhexafluorarsenat, LiClO₄: Lithiumperchlorat, LiBOB: Lithiumbisoxalatoborat, LiFSI: Lithiumbis(fluorsulfonyl)imid und Salzen der allgemeinen Formel Li[N(SO₂CₙF₂ₙ₊₁)(SO₂CₘF₂ₘ₊₁)], worin n und m gleich oder verschieden und ganze Zahlen von 1 bis 10 sind, wie etwa LiTFSI: Lithiumbis(trifluormethylsulfonyl)imid oder LiN(CF₃SO₂)₂ oder LiBeti: Lithiumbis(perfluorethylsulfonyl)imid, LiODBF, LiB(C₆H₅), LiCF₃SO₃, LiC(CF₃SO₂)₃ (LiTFSM), und ihren Gemischen ausgewählt ist.

3. Wiederaufladbarer Lithiumionenakkumulator gemäß Anspruch 2, bei dem das Leitsalz LiTFSI ist.

4. Wiederaufladbarer Lithiumionenakkumulator gemäß einem der vorangehenden Ansprüche, bei dem der Elektrolyt 0,1 bis 10 Mol/l Leitsalz umfasst.

5. Wiederaufladbarer Lithiumionenakkumulator gemäß einem der vorangehenden Ansprüche, bei dem sich der flüssige, ionische Elektrolyt aus der ionischen Flüssigkeit(en), aus einem Leitsalz oder Leitsalzen und einem Additiv besteht.

6. Wiederaufladbarer Lithiumionenakkumulator gemäß einem der vorangehenden Ansprüche, bei dem der Elektrolyt LiTFSI, vorzugsweise in Höhe von 1,6 Mol/l, in einem aus PP₁₃TFSI, HMITFSI, DMBITFSI und BMITFSI ausgewählten flüssigen, ionischen Lösungsmittel und 1 bis 10 Vol.-%, vorzugsweise 5 Vol.-% VEC umfasst.

7. Wiederaufladbarer Lithiumionenakkumulator gemäß einem der vorangehenden Ansprüche, welcher eine Knopfzelle ist.

8. Flüssiger, ionischer Elektrolyt, welcher LiTFSI in einem aus PP₁₃TFSI, HMITFSI, DMBITFSI und BMITFSI ausgewählten flüssigen, ionischen Lösungsmittel und 1 bis 10 Vol.-%, vorzugsweise 5 Vol.-% VEC umfasst.

9. Flüssiger, ionischer Elektrolyt gemäß Anspruch 8, welcher 1,6 Mol/l LiTFSI umfasst.

## Claims

1. A lithium ion rechargeable accumulator comprising a negative electrode, the active material of which is graphite carbon, a positive electrode, the active material of which is LiFePO₄, and an ionic liquid electrolyte comprising at least one ionic liquid of formula C⁺A- wherein C⁺ represents a cation and A- represents an anion, and at least one conducting salt, the ionic liquid electrolyte further comprising an organic additive which is vinyl ethylene carbonate (VEC); wherein the ionic liquid comprises a cation C⁺ selected from piperidiniums, quaternary ammoniums, imidazoliums, and tautomeric forms thereof, associated with an anion A⁻ selected from BF₄⁻ and bis(trifluoromethanesulfonyl)imidide TFSI (N(SO₂CF₃)₂⁻) ; preferably the ionic liquid is selected from PP₁₃TFSI, or N,N-propyl-methyl-piperidinium bis(trifluoromethanesulfonyl) imidide; HMITFSI or (1-hexyl-3-methylimidazolium) bis(trifluoro-methanesulfonyl) imidide; DMBITFSI or (1,2-dimethyl-3-n-butylimidazolium) bis(trifluoromethanesulfonyl) imidide; BMITFSI or (1-n-butyl-3-methyl-imidazolinium) bis(trifluoromethanesulfonyl) imidide; and mixtures thereof; and wherein the electrolyte comprises from 1 to 10%, preferably from 2 to 5% by volume, of additive; based on the volume of the ionic liquid.

2. The lithium ion rechargeable accumulator according to claim 1 wherein the conducting salt is selected from lithium salts; preferably the conducting salt is selected from LiPF₆: lithium hexafluorophosphate, LiBF₄: lithium tetrafluoroborate, LiAsF₆: lithium hexafluoroarsenate, LiClO₄: lithium perchlorate, LiBOB: lithium bis-oxalatoborate, LiFSI: lithium bis(fluorosulfonyl) imidide, salts of general formula Li [N (SO₂CₙF₂ₙ₊₁) (SO₂CₘF₂ₘ₊₁)]) wherein n and m, either identical or different, are natural integers comprised between 1 and 10, such as LiTFSI: lithium bis(trifluoromethylsulfonyl) imidide or LiN(CF₃SO₂)₂, or LiBeti: lithium bis(perfluoroethylsulfonyl) imidide, LiODBF, LiB(C₆H₅), LiCF₃SO₃, LiC(CF₃SO₂)₃ (LiTFSM), and mixtures thereof.

3. The lithium ion rechargeable accumulator according to claim 2, wherein the conducting salt is LiTFSI.

4. The lithium ion rechargeable accumulator according to any one of the preceding claims wherein the electrolyte comprises from 0.1 to 10 mol/L of conducting salt.

5. The lithium ion rechargeable accumulator according to any one of the preceding claims wherein the ionic liquid electrolyte is composed of the ionic liquid(s), the conducting salt(s) and the organic additive.

6. The lithium ion rechargeable accumulator according to any one of the preceding claims wherein the electrolyte comprises LiTFSI, preferably in an amount of 1.6 mol/L, in an ionic liquid solvent selected from PP₁₃TFSI, HMITFSI, DMBITFSI, and BMITFSI; and from 1 to 10% by volume, preferably 5% by volume of VEC.

7. The lithium ion rechargeable accumulator according to any one of the preceding claims, which is a button battery cell.

8. An ionic liquid electrolyte comprising LiTFSI in an ionic liquid solvent selected from PP₁₃TFSI, HMITFSI, DMBITFSI, and BMITFSI; and from 1 to 10% by volume, preferably 5% by volume of VEC.

9. The ionic liquid electrolyte according to claim 8, comprising 1.6 mol/L of LiTFSI.
